# EUROPEAN PATENT APPLICATION

(11) **EP 4 693 251 A1**
(43) Date of publication of application: **11.02.2026**
(21) Application number: 24779265.8
(22) Date of filing: 07.03.2024
(51) Int. Cl.: G08G 1/123, G16Y 10/40, G16Y 20/20, G16Y 40/10

(54) **OPERATION MANAGEMENT SYSTEM AND OPERATION MANAGEMENT METHOD**

(30) Priority: 28.03.2023 JP 2023052197
(71) Applicant: Hitachi, Ltd., Tokyo 100-8280 (JP)
(72) Inventor: KONDO, Akihiro, Tokyo 100-8280 (JP); ITO, Hideaki, Tokyo 100-8280 (JP); OTSU, Tomohiro, Tokyo 100-8280 (JP)
(74) Representative: MERH-IP Matias Erny Reichl Hoffmann Patentanwälte PartG mbB
(86) International application number: PCT/JP2024/008843
(87) International publication number: WO 2024/203131

(57) **Abstract**

An operation management system for managing an operation of a plurality of electric vehicles includes: an operation planning unit configured to create an operation plan for the electric vehicles based on a precondition; a re-planning necessity determination unit configured to compare an actual measured value of a remaining battery level with a predicted value of the remaining battery level in the operation plan for an electric vehicle traveling according to the operation plan, and determine whether it is required to re-plan the operation plan; and an influence range detection unit configured to compare a value of the precondition when the operation plan is created with an actual measured value of a corresponding condition for the operation plan determined to require re-planning, and specify a condition with a discrepancy as a factor of the re-planning. The operation planning unit re-plans an unexecuted operation plan influenced by the condition specified as the factor. Therefore, efficiency of the operation of the plurality of electric vehicles can be improved.

## Description

### Technical Field

The present invention relates to an operation management system and an operation management method.

### Background Art

In related art, JP2016-064752A (PTL 1) discloses a technique for appropriately modifying a travel plan based on vehicle energy consumption. This publication discloses that "a vehicle energy management apparatus (100), which \controls a vehicle by predicting a future energy consumption (vehicle state information) and establishing a control plan, determines whether a re-speed-plan is required based on a comparison between an actual measured value of energy consumption and a predicted value of energy consumption used in the control plan, calculates, when it is determined that the re-speed-plan is required, an error between an actual measured value of a vehicle speed and a speed plan before update for at least one of a certain period from the past to the present or a current instant, reduces the error to update a speed plan from the present onward, calculates energy using the updated speed plan, and re-establishes the control plan".

### Citation List

### Patent Literature

PTL 1: JP2016-064752A

### Summary of Invention

### Technical Problem

When vehicle traveling is planned, it is important to avoid a situation where required energy is insufficient during traveling and the traveling cannot be continued. A situation where traveling cannot be continued due to insufficient gasoline is referred to as gas depletion, and a situation where traveling cannot be performed due to insufficient battery electric power is referred to as power depletion.

In recent years, an electric vehicle (EV) that travels using battery electric power has been increasingly used, but since electric power used by the electric vehicle for traveling is also used for other purposes such as air conditioning, there is a concern that unexpected power depletion may occur.

In a case where the electric vehicle is used as a delivery vehicle for delivering cargo in logistics, when power depletion occurs in the vehicle during delivery, cargo transfer to another vehicle or the like also occurs, which is a significant problem that cannot be solved only by moving the vehicle where the power depletion occurs.

Further, for example, when temperature is lower than expected, a certain vehicle consumes a large amount of electric power due to use of heating and thus causes power depletion, power depletion may similarly occur in other vehicles.

However, in the related art, reflecting the occurrence of power depletion in other vehicles to improve an overall vehicle operation efficiency is not considered.

Therefore, an object of the invention is to improve efficiency of an operation of a plurality of electric vehicles.

### Solution to Problem

In order to achieve the above object, a representative operation management system of the invention is an operation management system for managing an operation of a plurality of electric vehicles, the operation management system including: an operation planning unit configured to create an operation plan for the electric vehicles based on a precondition; a re-planning necessity determination unit configured to compare an actual measured value of a remaining battery level with a predicted value of the remaining battery level in the operation plan for an electric vehicle traveling according to the operation plan, and determine whether it is required to re-plan the operation plan; and an influence range detection unit configured to compare a value of the precondition when the operation plan is created with an actual measured value of a corresponding condition for the operation plan determined to require re-planning, and specify a condition with a discrepancy as a factor of the re-planning, in which the operation planning unit re-plans an unexecuted operation plan influenced by the condition specified as the factor.

In addition, a representative operation management method of the invention is an operation management method for managing an operation of a plurality of electric vehicles, the operation management method including: executing, by an operation management server, an operation planning step of creating an operation plan for the electric vehicles based on a precondition, a re-planning necessity determination step of comparing an actual measured value of a remaining battery level with a predicted value of the remaining battery level in the operation plan for an electric vehicle traveling according to the operation plan, and determining whether it is required to re-plan the operation plan, an influence range detection step of comparing a value of the precondition when the operation plan is created with an actual measured value of a corresponding condition for the operation plan determined to require re-planning, and specifying a condition with a discrepancy as a factor of the re-planning, and a re-planning step of re-planning an unexecuted operation plan influenced by the condition specified as the factor.

### Advantageous Effects of Invention

According to the invention, efficiency of an operation of a plurality of electric vehicles can be improved. Problems, configurations, and effects other than those described above will become apparent by the following description of an embodiment.

### Brief Description of Drawings

[FIG. 1] FIG. 1 is a configuration diagram of an operation management server according to a first embodiment.
[FIG. 2] FIG. 2 is a flowchart showing processing of the operation management server.
[FIG. 3] FIG. 3 is a flowchart showing details of re-planning necessity determination.
[FIG. 4] FIG. 4 is a flowchart showing details of cause candidate detection.
[FIG. 5] FIG. 5 is a diagram showing a data string of the cause candidate detection.
[FIG. 6] FIG. 6 is a diagram showing a change in an identical condition.
[FIG. 7] FIG. 7 is a specific example of data.
[FIG. 8] FIG. 8 is a diagram showing setting of the identical condition.
[FIG. 9] FIG. 9 is a diagram showing re-planning.
[FIG. 10] FIG. 10 is a flowchart for specifying a vehicle condition or a driver condition as a factor.

### Description of Embodiments

Hereinafter, an embodiment will be described with reference to the drawings.

### [First Embodiment]

In a first embodiment, an operation management server 20 having a function of an operation management system will be described as an example.

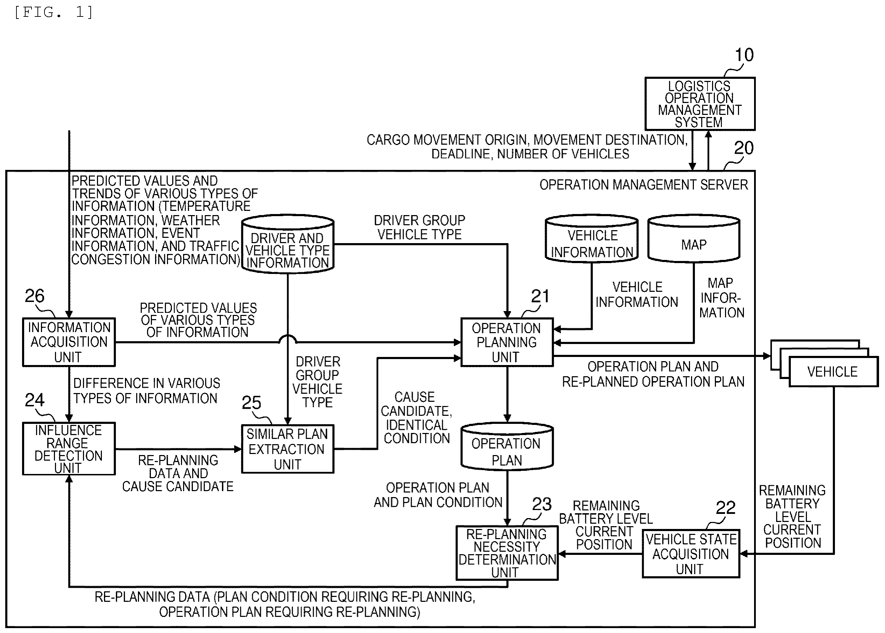

FIG. 1 is a configuration diagram of the operation management server 20 according to the first embodiment. The operation management server 20 is connected to a logistics operation management system 10. The logistics operation management system 10 transmits, to the operation management server 20, a cargo movement origin, a movement destination, a deadline, the number of vehicles, and the like. Here, the number of vehicles is the number of vehicles that deliver cargo in logistics (delivery vehicles), and each vehicle is an electric vehicle.

Further, the operation management server 20 can communicate with each vehicle, and receives a remaining battery level and position information from each vehicle.

The operation management server 20 creates an operation plan of each vehicle using data received from the logistics operation management system 10 and each vehicle. The operation management server 20 transmits the operation plan corresponding to each vehicle, and each vehicle travels according to the operation plan. The operation management server 20 can transmit the operation plan and a state of each vehicle to the logistics operation management system 10.

The operation management server 20 includes an operation planning unit 21, a vehicle state acquisition unit 22, a re-planning necessity determination unit 23, an influence range detection unit 24, a similar plan extraction unit 25, and an information acquisition unit 26. The operation management server 20 may be a computer including a central processing unit (CPU), a main storage apparatus (memory), and an auxiliary storage apparatus. When the operation management server 20 is a computer, the CPU reads operation management programs from the auxiliary storage apparatus, loads the operation management programs in the main storage apparatus, and sequentially executes the operation management programs to implement functions corresponding to the operation planning unit 21, the vehicle state acquisition unit 22, the re-planning necessity determination unit 23, the influence range detection unit 24, the similar plan extraction unit 25, and the information acquisition unit 26.

The operation planning unit 21 creates the operation plan of the vehicle, which is an electric vehicle, based on vehicle information, a map, driver and vehicle type information, and a precondition, and provides the operation plan to the vehicle.

The vehicle information is information indicating a vehicle type or the like of the vehicle. In the map, roads where the vehicle travels are indicated by connections between links and nodes. The driver and vehicle type information indicates an attribute of a driver, a characteristic for each vehicle type, and the like.

The precondition is set by predicting various conditions that influence an operation of the vehicle before the operation is started. The conditions that influence the operation of the vehicle may include an external condition related to the outside of the vehicle, a vehicle condition related to the vehicle, and a driver condition related to the driver.

The external condition includes weather, an event, traffic congestion, and the like. The weather includes rainfall, sunlight, temperature, and the like. The event is an event that temporarily influences traffic such as a festival, construction, or an accident that occurs in the vicinity. The traffic congestion information is information on traffic congestion predicted based on the day of the week or the time of the day. Traffic congestion caused by an accident or the like may be treated as the event.

These conditions are associated with the links set for the roads.

If power depletion is predicted in the vehicle traveling according to the operation plan, the operation planning unit 21 re-plans the operation plan of the vehicle where the power depletion is predicted. In addition, if the power depletion of the vehicle traveling according to the operation plan is predicted and a factor thereof is specified, the operation planning unit 21 re-plans an unexecuted operation plan influenced by the factor. That is, when it is determined that re-planning is required for a delivery vehicle during delivery, the operation planning unit 21 re-plans an operation plan of a delivery vehicle before departure. As a result, for the vehicle before departure, it is possible to create the operation plan in consideration of power depletion factors of other vehicles.

Specifically, the operation planning unit 21 re-plans an operation plan including a link associated with the factor among unexecuted operation plans.

The vehicle state acquisition unit 22 acquires information on the remaining battery level and a current position from each vehicle and outputs the information to the re-planning necessity determination unit 23.

The re-planning necessity determination unit 23 determines whether it is required to re-plan the operation plan by comparing an actual measured value of the remaining battery level with a predicted value of the remaining battery level in the operation plan for the electric vehicle traveling according to the operation plan. The actual measured value of the remaining battery level is the remaining battery level acquired by the vehicle state acquisition unit 22. The predicted value of the remaining battery level in the operation plan can be specified based on the operation plan and a plan condition (a prediction condition used for the plan) created by the operation planning unit 21.

As an example, the re-planning necessity determination unit 23 determines, based on the operation plan and the actual measured value of the remaining battery level of the traveling vehicle, whether traveling on a route indicated in the operation plan is completable, and determines that re-planning is required when the remaining battery level is insufficient to complete the traveling.

Alternatively, as an example, the re-planning necessity determination unit 23 compares the remaining battery level of the traveling vehicle with the remaining battery level at the time of the operation plan, and determines that re-planning is required when the remaining battery level of the traveling vehicle is smaller than the remaining battery level at the time of the operation plan.

The re-planning necessity determination unit 23 outputs a plan condition requiring re-planning and the operation plan requiring re-planning to the influence range detection unit 24 as re-planning data.

The information acquisition unit 26 acquires predicted values and trends of various types of information (temperature information, weather information, event information, traffic congestion information, and the like) and manages the predicted values and the trends in association with the links set for the roads.

The information acquisition unit 26 outputs the predicted values of the various types of information (temperature information, weather information, event information, traffic congestion information, and the like) to the operation planning unit 21.

The information acquisition unit 26 compares an actual trend with the prediction for the various types of information (temperature information, weather information, event information, traffic congestion information, and the like), and outputs a difference therebetween to the influence range detection unit 24.

The influence range detection unit 24 specifies a factor that requires re-planning for the operation plan determined to require re-planning by the re-planning necessity determination unit 23. Specifically, the influence range detection unit 24 compares a value of the precondition at the time of creating the operation plan, which requires re-planning, with an actual measured value of a corresponding condition, and specifies a condition with a discrepancy as the factor of re-planning.

The influence range detection unit 24 outputs the re-planning data (the plan condition requiring re-planning and the operation plan requiring re-planning) and a cause candidate (specified factor) to the similar plan extraction unit 25.

The similar plan extraction unit 25 extracts an operation plan including the cause candidate as a similar plan based on the re-planning data, the cause candidate, a driver group, and information on the vehicle type. The similar plan may be extracted from the unexecuted operation plans. For example, if a certain external condition is the cause candidate, an operation plan including a link associated with the external condition in a scheduled travel route is extracted as the similar plan. At this time, the similar plan may be further filtered by matching the vehicle condition or the driver condition.

The similar plan extraction unit 25 outputs the similar plan including the same condition as the cause candidate to the operation planning unit 21. The operation planning unit 21 re-plans the operation plan for the vehicle where the power depletion is predicted and a vehicle with a similar plan.

In this way, the operation management server 20 estimates predicted electric power consumption by assuming the condition (prediction condition) during traveling of the electric vehicle, and performs a vehicle dispatch plan of the electric vehicle. When the vehicle where the power depletion is predicted during traveling due to a discrepancy between the prediction condition and an actual condition and which requires re-planning is detected, a vehicle having a condition discrepancy similar to that of the vehicle that requires re-planning is specified among a plurality of other vehicles before traveling, and re-planning is performed for the specified vehicle. Therefore, occurrence of re-planning during traveling can be avoided, an influence on a logistics operation can be reduced, and a load on a customer operation management system can be reduced.

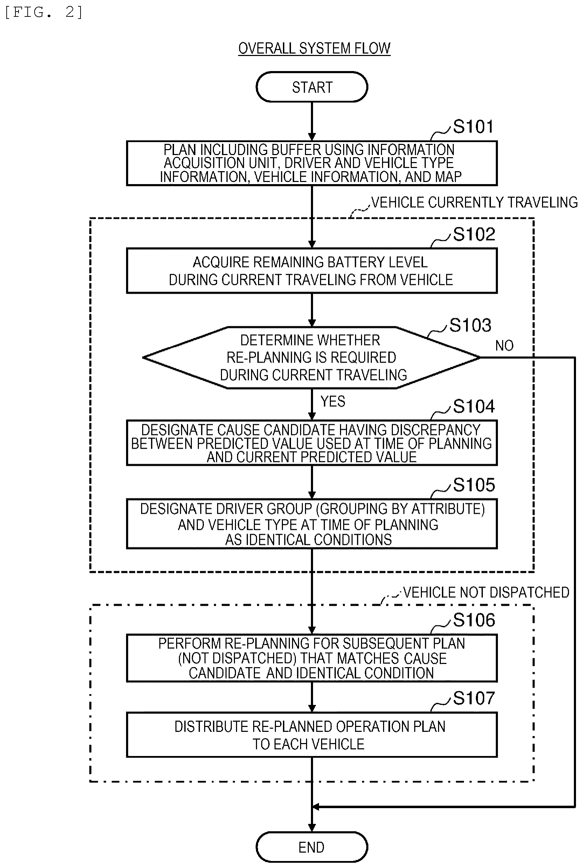

FIG. 2 is a flowchart showing processing of the operation management server 20. First, the operation planning unit 21 creates the operation plan including a buffer using the information acquisition unit 26, the driver and vehicle type information, the vehicle information, and the map (step S101). The operation planning unit 21 transmits the created operation plan to a corresponding vehicle. Each vehicle sequentially starts traveling according to the operation plan received by itself.

The vehicle state acquisition unit 22 acquires the remaining battery level from the vehicle currently traveling (step S102). The re-planning necessity determination unit 23 determines whether it is required to perform re-planning for the vehicle currently traveling (step S103). If re-planning is not required, the processing is ended directly.

If re-planning is required, the influence range detection unit 24 specifies a cause candidate where there is a discrepancy between a predicted value used at the time of planning and a current predicted value (step S104). The similar plan extraction unit 25 sets the driver group (grouping by attribute) and the vehicle type at the time of planning as identical conditions (step S105).

The operation planning unit 21 re-plans a subsequent plan (not dispatched) that matches the cause candidate and the identical conditions (step S106). Then, the re-planned operation plan is distributed to each vehicle (step S107), and the processing is ended.

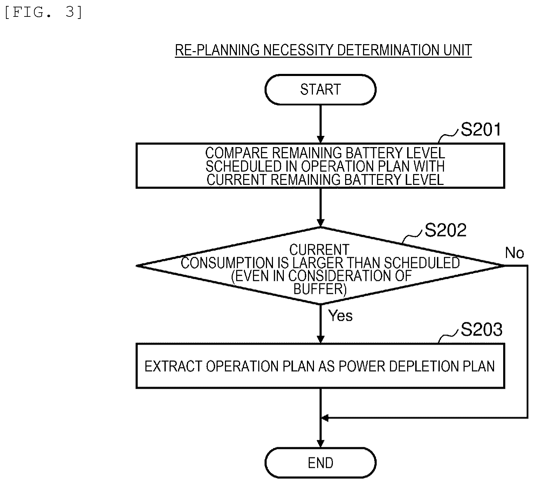

FIG. 3 is a flowchart showing details of re-planning necessity determination (step S103). The re-planning necessity determination unit 23 first compares the remaining battery level scheduled in the operation plan with a current remaining battery level (step S201). Such comparison is determination as to whether traveling is completed with the current remaining level as transition occurs according to a future predicted trend.

As a result of the comparison, if current consumption is larger than scheduled consumption (even in consideration of the buffer) (step S202; Yes), the re-planning necessity determination unit 23 extracts the operation plan as a power depletion plan (step S203) and ends the processing. If the current consumption is not larger than the scheduled consumption (step S202; No), the processing is ended directly.

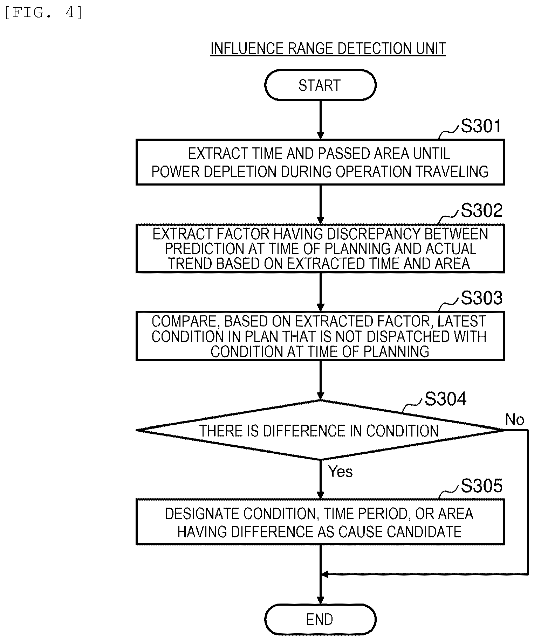

FIG. 4 is a flowchart showing details of cause candidate detection (step S104). The influence range detection unit 24 first extracts a time and a passed area (a sequence of passed links) until power depletion during operation traveling (step S301).

The influence range detection unit 24 extracts a factor where there is a discrepancy between prediction at the time of planning and an actual trend based on the extracted time and the extracted area (step S302).

The influence range detection unit 24 compares, based on the extracted factor, a latest condition in the plan that is not dispatched with the condition at the time of planning (step S303).

As a result of comparison, if there is a difference between the conditions (step S304; Yes), the influence range detection unit 24 specifies a condition, a time period, or an area having the difference as the cause candidate (step S305), and ends the processing. If there is no difference between the conditions (step S304; No), the processing is ended directly.

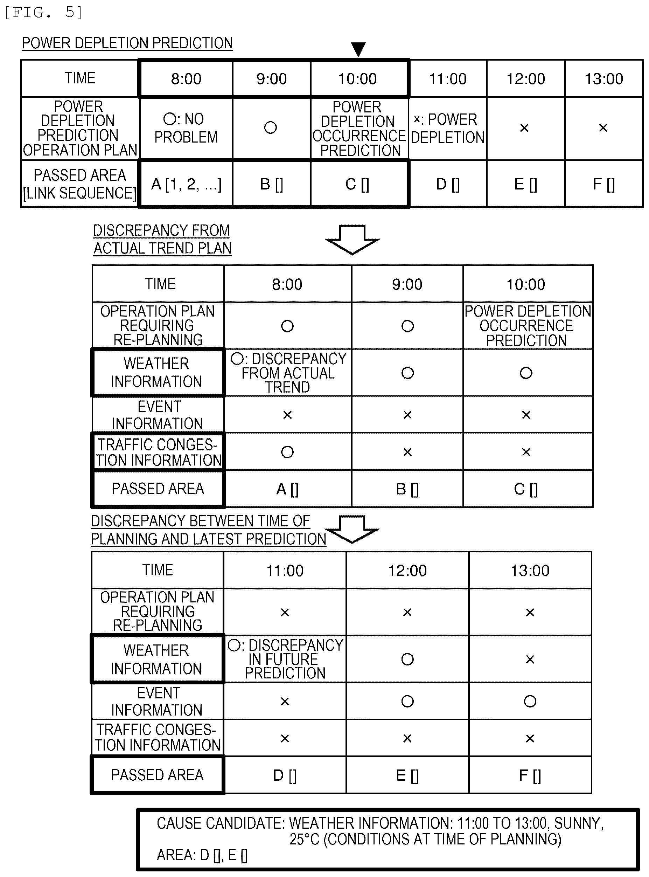

FIG. 5 is a diagram showing a data string of the cause candidate detection. In FIG. 5, prediction that "power depletion occurs at 11:00" for a certain vehicle is made at 10:00. In the power depletion prediction, the area through which the vehicle passes is associated as a link sequence.

Based on the time and the passed area, the influence range detection unit 24 determines a discrepancy between an actual trend and a plan. That is, prediction and actual trends of weather information, event information, and traffic congestion information in the area passed up to 10:00 are compared. As a result, there is no discrepancy in the event information, there is a temporary discrepancy in the traffic congestion information, and there is a discrepancy in the weather information across all times and areas.

Therefore, the influence range detection unit 24 compares a discrepancy between the prediction at the time of planning and latest prediction for the weather information. As a result, since there is a discrepancy in the weather information between the prediction at the time of planning and the latest prediction, the influence range detection unit 24 designates the weather information as the cause candidate. In FIG. 5, the influence range detection unit 24 designates "WEATHER INFORMATION 11:00 TO 13:00, SUNNY, 25°C (CONDITIONS AT TIME OF PLANNING)" and "AREA: D [], E []" as the cause candidate.

When there are a plurality of conditions (factors), weighting may be performed for each factor. A weight of each factor is determined according to magnitude of an influence thereof and duration. For example, a large value is set as a weight since the discrepancy in weather has a large influence and time continuity. If the weight is set in this manner, it is possible to preferentially view an item having a large influence when viewing the discrepancy between the predicted value at the time of planning and the latest predicted value. A discrepancy in an item having a small influence may be ignored as an error.

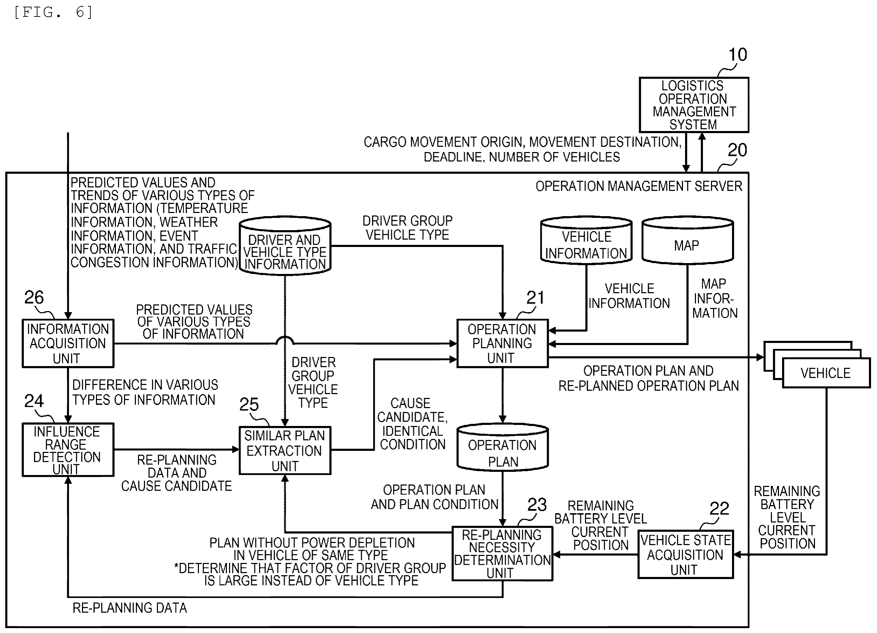

In the description so far, a case of filtering on the condition that the vehicle type and the driver group are the same has been described, and alternatively, the condition may be that only one of the vehicle type or the driver group is the same. FIG. 6 is a diagram showing a change in the identical condition.

In FIG. 6, the re-planning necessity determination unit 23 further outputs the re-planning data to the similar plan extraction unit 25. The similar plan extraction unit 25 extracts the operation plan including the cause candidate as the similar plan based on the re-planning data, the cause candidate, the driver group, and the information on the vehicle type. When a certain external condition is the cause candidate, the similar plan extraction unit 25 normally performs filtering on the condition that the vehicle type and the driver group are the same. However, when there is a plan where power depletion does not occur in a vehicle of the same vehicle type, it may be considered that a factor of the driver group has a large influence, and the vehicle type may be excluded from the identical condition. That is, in this case, the similar plan is extracted by filtering only by the driver group.

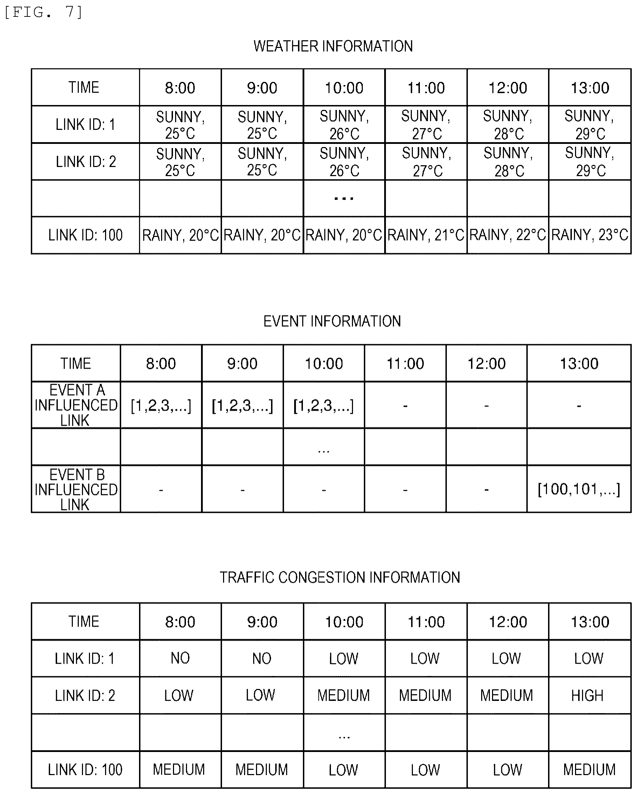

FIG. 7 is a specific example of data.

The weather information associates data such as "sunny, 25°C" with a time and a link ID. The event information associates an influenced link sequence with a time and an event. The traffic congestion information associates a degree of traffic congestion with a time and a link.

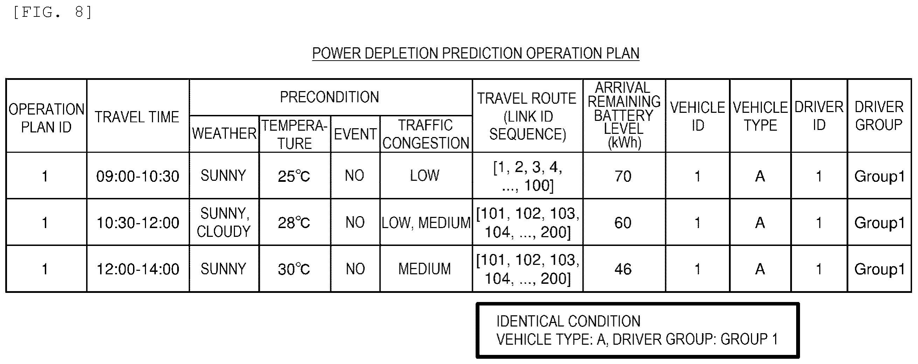

FIG. 8 is a diagram showing setting of the identical condition (step S105). In FIG. 8, since filtering is performed on the condition that the vehicle type and the driver group are the same, all unexecuted operation plans expected to have power depletion have the vehicle type of "A" and the driver group of "Group 1".

Here, the vehicle type is not limited to a broad category such as a passenger car or a truck, and for example, a specific vehicle type name such as a vehicle type A1 of A company or a vehicle type B2 of B company among trucks can be used.

As the driver group, years of experience, driving carefulness, gender, sensitivity to heat or cold, and the like can be used.

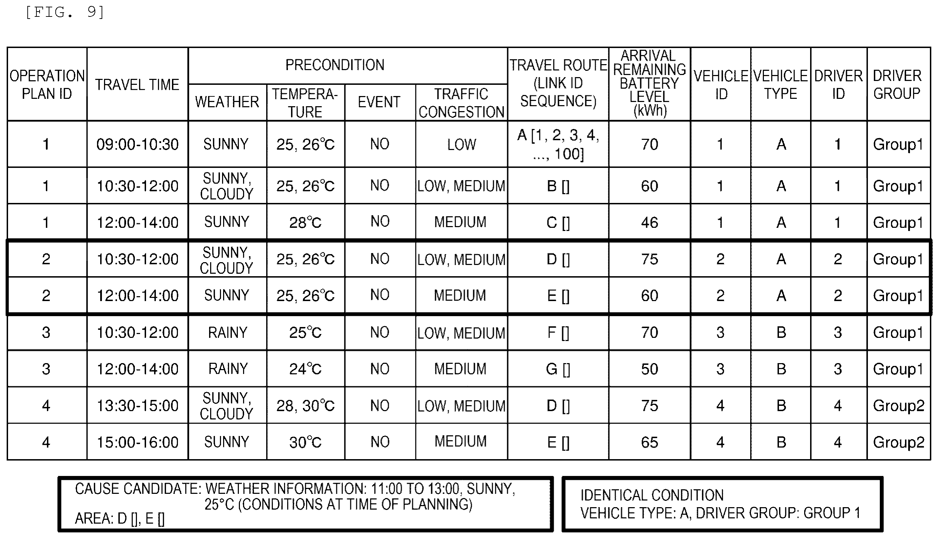

FIG. 9 is a diagram showing re-planning (step S106). In FIG. 9, the vehicle type and the driver group are the identical condition. The cause candidate is "WEATHER INFORMATION 11:00 TO 13:00, SUNNY, 25°C (CONDITIONS AT TIME OF PLANNING)" and "AREA: D [], E []", and the identical condition is "VEHICLE TYPE: A, DRIVER GROUP: GROUP 1". An operation plan including the cause candidate and satisfying the identical condition is an operation plan ID2 in FIG. 9. Therefore, the operation planning unit 21 selectively re-plans the operation plan of the operation plan ID2.

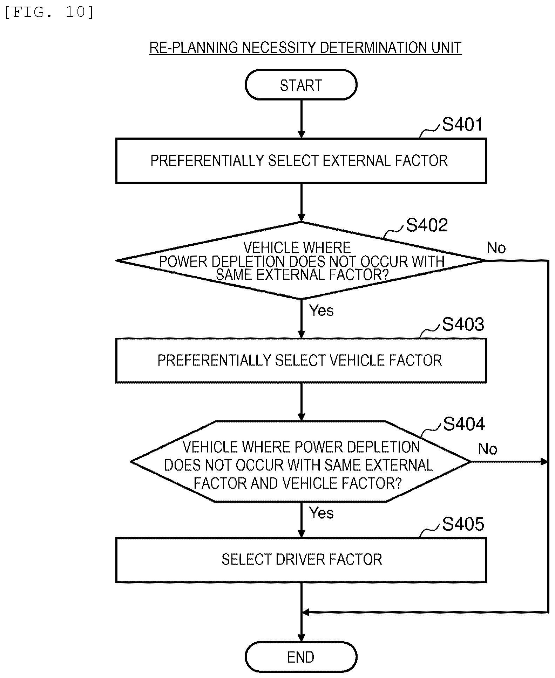

In the description so far, a case where the external condition is the factor has been described, and alternatively, the vehicle condition or the driver condition may also be specified as the factor. FIG. 10 is a flowchart when the vehicle condition or the driver condition is specified as the factor.

First, the influence range detection unit 24 preferentially selects the external condition as the factor (step S401). Next, the influence range detection unit 24 determines whether there is a vehicle where power depletion does not occur with the same external factor. Such determination is determination as to whether there is an electric vehicle requiring re-planning and an electric vehicle not requiring re-planning under the same external condition. If there is no vehicle where power depletion does not occur with the same external factor (step S402; No), the processing is ended directly with the external condition being the factor.

If there is a vehicle where power depletion does not occur with the same external factor (step S402; Yes), the influence range detection unit 24 preferentially selects the vehicle condition as the factor (step S403). Next, the influence range detection unit 24 determines whether there is a vehicle where power depletion does not occur with the same external factor under the same vehicle condition. Such determination is determination as to whether there is an electric vehicle requiring re-planning and an electric vehicle not requiring re-planning under the same vehicle condition. If there is no vehicle where power depletion does not occur with the same external factor under the same vehicle condition (step S404; No), the processing is ended directly with the vehicle condition being the factor.

If there is a vehicle where power depletion does not occur with the same external factor and the same vehicle factor (step S404; Yes), the influence range detection unit 24 selects the driver condition as the factor (step S405) and ends the processing.

As described above, the operation management server 20 is an operation management system for managing an operation of a plurality of electric vehicles, and includes: the operation planning unit 21 configured to create the operation plan for the electric vehicles based on the precondition; the re-planning necessity determination unit 23 configured to compare the actual measured value of the remaining battery level with the predicted value of the remaining battery level in the operation plan for an electric vehicle traveling according to the operation plan, and determine whether it is required to re-plan the operation plan; and the influence range detection unit 24 configured to compare the value of the precondition when the operation plan is created with the actual measured value of the corresponding condition for the operation plan determined to require re-planning, and specify the condition with the discrepancy as the factor of the re-planning. The operation planning unit 21 re-plans the unexecuted operation plan influenced by the condition specified as the factor.

Therefore, when power depletion is predicted for a vehicle after departure, it is possible to avoid power depletion in other vehicles by reflecting the prediction in an operation plan of a vehicle before departure, and to improve efficiency of an operation of a plurality of electric vehicles.

The re-planning necessity determination unit 23 determines, based on the operation plan and the actual measured value of the remaining battery level, whether traveling on a route indicated in the operation plan is completable, and determines that the re-planning is required when the remaining battery level is insufficient to complete the traveling.

Therefore, it is possible to accurately determine power depletion of the electric vehicle and perform re-planning.

The operation management server 20 uses at least one of weather, an event, and traffic congestion as the precondition and the condition.

Therefore, power depletion can be predicted based on various external conditions that influence an operation.

The operation management server 20 further includes the information acquisition unit 26 configured to acquire the precondition and the condition and to manage the precondition and the condition in association with the link set for the road, and the operation planning unit 21 re-plans an operation plan including a link associated with the factor among the unexecuted operation plans.

In this way, by associating the condition with the link, it is possible to selectively perform re-planning for vehicles scheduled to travel on the same route.

The precondition and the condition include the external condition related to the outside of the vehicle, the vehicle condition related to the vehicle, and the driver condition related to the driver.

Therefore, the factor of power depletion can be accurately determined in consideration of the condition related to the vehicle and the condition related to the driver.

The influence range detection unit 24 preferentially specifies the external condition as the factor, preferentially specifies the vehicle condition as the factor when there is an electric vehicle requiring the re-planning and an electric vehicle not requiring the re-planning under the same external condition, and specifies the driver condition as the factor when there is an electric vehicle requiring the re-planning and an electric vehicle not requiring the re-planning under the same vehicle condition.

Therefore, it is possible to predict and avoid power depletion caused by the vehicle or the driver.

The plurality of electric vehicles are delivery vehicles that deliver cargo in logistics, and when it is determined that re-planning is required for a delivery vehicle during delivery, the operation planning unit 21 re-plans an operation plan of a delivery vehicle before departure.

Therefore, it is possible to reduce a burden of logistics management and enable efficient delivery.

The invention is not limited to the above-described embodiment and includes various modifications. For example, the above-described embodiment has been described in detail to facilitate understanding of the invention, and the invention is not necessarily limited to those including all the configurations described above. In addition to deletion of such a configuration, it is also possible to replace the configuration or add a configuration.

### Reference Signs List

- 10:: logistics operation management system
- 20:: operation management server
- 21:: operation planning unit
- 22:: vehicle state acquisition unit
- 23:: re-planning necessity determination unit
- 24:: influence range detection unit
- 25:: similar plan extraction unit
- 26:: information acquisition unit

## Claims

1. An operation management system for managing an operation of a plurality of electric vehicles, the operation management system comprising:
an operation planning unit configured to create an operation plan for the electric vehicles based on a precondition;
a re-planning necessity determination unit configured to compare an actual measured value of a remaining battery level with a predicted value of the remaining battery level in the operation plan for an electric vehicle traveling according to the operation plan, and determine whether it is required to re-plan the operation plan; and
an influence range detection unit configured to compare a value of the precondition when the operation plan is created with an actual measured value of a corresponding condition for the operation plan determined to require re-planning, and specify a condition with a discrepancy as a factor of the re-planning, wherein
the operation planning unit re-plans an unexecuted operation plan influenced by the condition specified as the factor.

2. The operation management system according to claim 1, wherein
the re-planning necessity determination unit determines, based on the operation plan and the actual measured value of the remaining battery level, whether traveling on a route indicated in the operation plan is completable, and determines that the re-planning is required when the remaining battery level is insufficient to complete the traveling.

3. The operation management system according to claim 1, wherein
at least one of weather, an event, and traffic congestion is used as the precondition and the condition.

4. The operation management system according to claim 1, further comprising:
an information acquisition unit configured to acquire the precondition and the condition and to manage the precondition and the condition in association with a link set for a road, wherein
the operation planning unit re-plans an operation plan including a link associated with the factor among the unexecuted operation plans.

5. The operation management system according to claim 1, wherein
the precondition and the condition include an external condition related to outside of a vehicle, a vehicle condition related to the vehicle, and a driver condition related to a driver.

6. The operation management system according to claim 5, wherein
the influence range detection unit preferentially specifies the external condition as the factor, preferentially specifies the vehicle condition as the factor when there is an electric vehicle requiring the re-planning and an electric vehicle not requiring the re-planning under the same external condition, and specifies the driver condition as the factor when there is an electric vehicle requiring the re-planning and an electric vehicle not requiring the re-planning under the same vehicle condition.

7. The operation management system according to claim 1, wherein
the plurality of electric vehicles are delivery vehicles that deliver cargo in logistics, and
when it is determined that re-planning is required for a delivery vehicle during delivery, the operation planning unit re-plans an operation plan of a delivery vehicle before departure.

8. An operation management method for managing an operation of a plurality of electric vehicles, the operation management method comprising:
executing, by an operation management server,
an operation planning step of creating an operation plan for the electric vehicles based on a precondition,
a re-planning necessity determination step of comparing an actual measured value of a remaining battery level with a predicted value of the remaining battery level in the operation plan for an electric vehicle traveling according to the operation plan, and determining whether it is required to re-plan the operation plan,
an influence range detection step of comparing a value of the precondition when the operation plan is created with an actual measured value of a corresponding condition for the operation plan determined to require re-planning, and specifying a condition with a discrepancy as a factor of the re-planning, and
a re-planning step of re-planning an unexecuted operation plan influenced by the condition specified as the factor.
